# EUROPEAN PATENT SPECIFICATION

(11) **EP 4 659 010 B1**
(45) Date of publication and mention of the grant of the patent: **18.11.2026**
(21) Application number: 24702631.3
(22) Date of filing: 26.01.2024
(51) Int. Cl.: G01N 27/447, H01J 49/04

(54) **SYSTEMS AND METHODS FOR CONTROLLING THE COUPLING POSITION OF A LIQUID FLOW OUTLET AND AN OPEN PORT INTERFACE**
SYSTEME UND VERFAHREN ZUR STEUERUNG DER KUPPLUNGSPOSITION EINES FLÜSSIGKEITSAUSLASSES UND EINER OFFENEN PORTSCHNITTSTELLE
SYSTÈMES ET PROCÉDÉS DE COMMANDE DE LA POSITION DE COUPLAGE D'UNE SORTIE D'ÉCOULEMENT DE LIQUIDE ET D'UNE INTERFACE DE PORT OUVERT

(30) Priority: 31.01.2023 US 202363482518 P
(43) Date of publication of application: 10.12.2025
(73) Proprietor: DH Technologies Development Pte. Ltd., Singapore 739256 (SG)
(72) Inventor: BELOBORODOV, Stanislav, Concord, Ontario L4K 4V8 (CA); SCHNEIDER, Bradley, Concord, Ontario L4K 4V8 (CA); LEBLANC, Yves, Concord, Ontario L4K 4V8 (CA)
(74) Representative: Maiwald GmbH
(86) International application number: PCT/IB2024/050726
(87) International publication number: WO 2024/161259

(56) References cited:
- WO-A1-2021/234644
- WO-A1-2022/201037
- WO-A1-2022/208393
- US-A1- 2021 121 905

## Description

### Introduction

An open port interface (OPI) is typically used to receive discrete droplets of solution that are subjected to ionization for mass spectrometry (MS) analysis. One of the advantages of this approach is the excess dilution that occurs in the liquid stream. The OPI configuration provides a velocity gradient into the transport tube that stretches the sample and provides efficient mixing with the diluent. This effect allows for direct analysis of samples containing non-MS friendly matrices (e.g., salts, surfactants, polymers and others) that would normally lead to ion suppression and significant reduction in signal. In examples, a capillary electrophoresis (CE) capillary outlet is directly inserted in the OPI, the OPI being coupled to an MS detection. Since CE operates at low flow rates (e.g., 1-100 nL/min range), this leads to a large dilution of the eluted analytes and minimizes matrix effect, thus allowing use of buffers that are typically used in CE, but not generally desirable to MS operation.
WO 2022/208393 A1 relates to a method of analyzing a liquid.

### Summary

In one aspect, the technology relates to a sample processing system that includes an open port interface (OPI) comprising a removal conduit, the removal conduit comprising a removal conduit inlet and a removal conduit outlet and being configured to transport liquid between the OPI and a downstream device via the removal conduit outlet, a fluid delivery pump configured to provide a liquid flow to the OPI, a transfer capillary in fluid communication with the removal conduit inlet, the transfer capillary comprising a transfer capillary tip located at a distance from the removal conduit inlet, and a distance adjusting device configured to adjust the distance between the transfer capillary tip and the removal conduit inlet.

In an example of the above aspect, the removal conduit inlet at least partially defines a receiving volume limited by a meniscus, and the transfer capillary tip is in fluid contact with the receiving volume inside the meniscus. For example, the distance adjusting device is configured to adjust the distance inside the meniscus. In another example, the system further includes a fluid pressure sensor configured to measure a pressure differential between the transfer capillary and the removal conduit, wherein the distance adjusting device is configured to adjust the distance based on the measured pressure differential. For example, the distance adjusting device is configured to adjust the distance so as to substantially eliminate the measured pressure differential. In another example, the transfer capillary is in fluid communication with a sampling device on a side thereof opposite the transfer capillary tip. In a further example, the distance adjusting device comprises a housing secured to at least one of the OPI and to the sampling device.

In further examples of the above aspect, the transfer capillary and the transfer capillary tip are enclosed within a movable sleeve, the transfer capillary tip being movable with respect to the transfer capillary within the movable sleeve, and the distance adjusting device is movably secured to the transfer capillary tip. In examples, the distance adjusting device comprises a rotating screw movably secured to the transfer capillary tip, and a rotation of the rotating screw results in a linear movement of the transfer capillary tip with respect to the transfer capillary. In another example, the distance adjusting device is movably secured to the removal conduit. In other examples, the distance adjusting device comprises a rotating screw movably secured to the removal conduit, and a rotation of the rotating screw results in a linear movement of the removal conduit with respect to the transfer capillary. For example, the distance adjusting device is movably secured to the transfer capillary.

In further examples, the distance adjusting device comprises a rotating screw movably secured to the transfer capillary, and a rotation of the rotating screw results in a linear movement of the transfer capillary with respect to the removal conduit. In another example, one of the transfer capillary, the transfer capillary tip and the removal conduit is movable in one of a longitudinal direction of the OPI and in a direction perpendicular to the longitudinal direction of the OPI. For example, the system further includes a locking mechanism configured to lock the transfer capillary in a longitudinal direction of the OPI. In further examples, an end of the transfer capillary tip has a cross-section that is substantially perpendicular to a longitudinal direction thereof.

In another aspect, the technology relates to a method for processing a liquid sample, the method including transferring the liquid sample from a transfer capillary to an OPI removal conduit via a removal conduit inlet, the removal conduit inlet at least partially defining a receiving volume limited by a meniscus, the transfer capillary comprising a transfer capillary tip in fluid communication with the receiving volume inside the meniscus, wherein the transfer capillary tip is at a distance from the removal conduit inlet inside the meniscus, measuring a pressure differential between the removal conduit and the transfer capillary tip, and adjusting the distance between the transfer capillary tip and the removal conduit inlet based on the measured pressure differential.

In another example of the above aspect, measuring the pressure differential further comprises determining a Venturi effect of the liquid sample between the removal conduit inlet and the transfer capillary tip. In a further example, adjusting the distance comprises adjusting the distance to substantially eliminate one of the measured pressure differential and the determined Venturi effect. In yet another example, adjusting the distance comprises moving the removal conduit with respect to the transfer capillary tip inside the meniscus. In a further example, adjusting the distance comprises moving the transfer capillary tip with respect to the transfer capillary inside the meniscus. In other example, adjusting the distance comprises moving the transfer capillary with respect to the removal conduit inside the meniscus. In further examples, adjusting the distance comprises moving one of the transfer capillary, the transfer capillary tip and the removal conduit in one of a longitudinal direction of the OPI and in a direction perpendicular to the longitudinal direction of the OPI.

### Brief Description of the Drawings

FIG. 1 is a schematic view of an example system combining acoustic droplet ejection (ADE) with an open port interface (OPI) sampling interface and electrospray ionization (ESI) source.
FIG. 2 is a schematic diagram illustrating operation of another particular example system in accordance with various examples of the disclosure.
FIGS. 3A-3C illustrate a sample transfer system and a CE-OPI interface with integrated mechanisms for OPI nozzle-outlet position adjustment and control, according to various examples of the disclosure.
FIG. 4 is an illustration of fluid flow modeling in an OPI interface, according to various examples of the disclosure.
FIG. 5 is an illustration of the siphoning effect in the OPI interface, according to various examples of the disclosure.
FIG. 6 is a flow chart illustrating an example method for processing a liquid sample, according to various examples of the disclosure.
FIG. 7 depicts a block diagram of a computing device.

### Detailed Description

Acoustic Ejection Mass Spectrometry (AEMS) is a high-throughput analytical platform, where nano-liter sized droplets, or samples, are ejected acoustically from a sample well plate in a non-contact manner, and captured in an open port interface (OPI). The sample is diluted and transferred from the OPI to a mass spectrometer (MS) for analysis. In addition, and as discussed in greater detail herein, there is siphoning force as a result of the liquid flow velocity moving past the CE capillary tip, and this siphoning force typically results in the degradation of the resolution of the resulting signal. Accordingly, a technical problem that exists is the fact that samples and buffers that are typically used in CE may not be usable in MS operations because the siphoning effect at the mouth of the OPI may degrade the resolution of the obtained measurements.

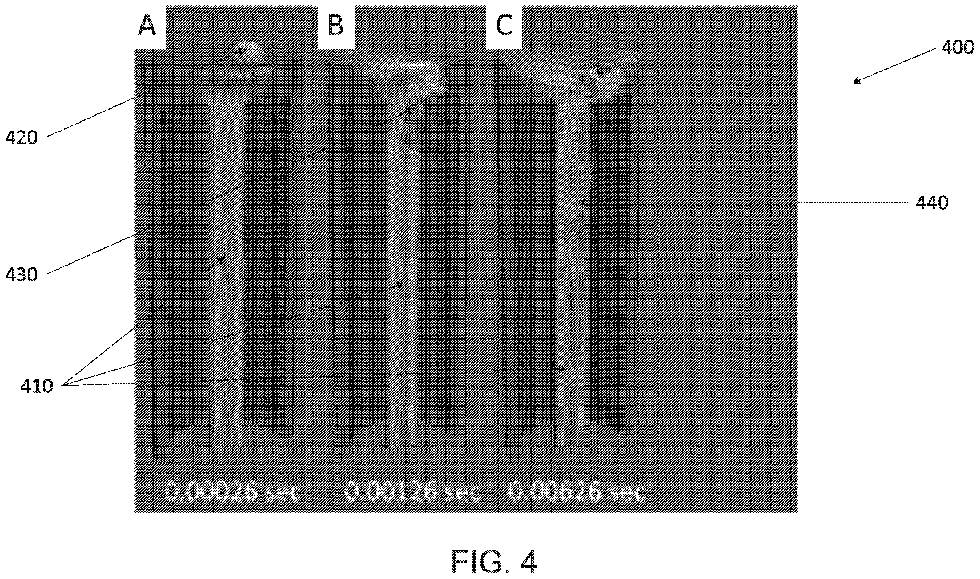

A technical solution to the above technical problem may include immersing the CE capillary outlet into the volume created at the opening of the OPI, and adjusting the distance between the CE capillary outlet and the volume of the OPI opening so as to substantially avoid higher flow rates which may distort the peaks and worsen the resolutions thereof. The technical solution thus includes improving or optimizing hydrodynamic flow in the CE capillary, which impacts the peak resolution as a result. In examples, the sample flow is driven by electro-osmosis, or in the case of the neutral coated capillaries used for isoelectric focusing, based upon the use of a mobilizer. In the case of pure electro-osmotic flow (EOF), the driving force for the EOF is established at the walls of the capillary, which gives a flatter flow profile, rather than the parabolic flows typically established by pressure-driven methods, and as a result does not hinder the resolution. In various CE examples, pressure-driven flows can degrade the resolution of the CE measurements, and should thus be avoided. FIG. 4, discussed below, shows CFD modeling of the liquid flow velocity within the OPI interface.

### Ionization devices

Although the sample ionization process is described above in the context of AEMS using OPI and ESI, other techniques of generating ionized samples may be used according to various examples of this disclosure. For example, ionized samples may be generated by desorption electrospray ionization (DESI), which is a combination of ESI and desorption ionization (DI) methods. In DESI, ionization takes place by directing an electrically charged mist to the sample surface that is a few millimeters away. The electrospray mist is pneumatically directed at the sample, thus forming splashed droplets that carry desorbed, ionized analytes. After ionization, the ions travel through air into the atmospheric pressure interface which is connected to the mass spectrometer.

Another ionization technique may include matrix-assisted laser desorption ionization (MALDI), which is an ionization technique that uses a laser energy absorbing matrix to create ions from large molecules with minimal fragmentation. In MALDI, a laser is fired at the matrix crystals in the dried-droplet spot. The matrix absorbs the laser energy; the matrix is desorbed and ionized (by addition of a proton) by this event. The hot plume produced during ablation contains many species: neutral and ionized matrix molecules, protonated and deprotonated matrix molecules, matrix clusters and nanodroplets.

Other ionization techniques may include rapid-fire mass spectrometry, liquid atmospheric pressure (LAP) MALDI, pneumatic ESI (which generates ions for mass spectrometry using electrospray by applying a high voltage to a liquid to produce an aerosol), and electron ionization (EI). EI may also be referred to as electron impact ionization or electron bombardment ionization, and is an ionization method in which energetic electrons interact with solid or gas phase atoms or molecules to produce ions. Any of the above techniques, as well as others that can perform sample ionization, may be used in examples of this disclosure.

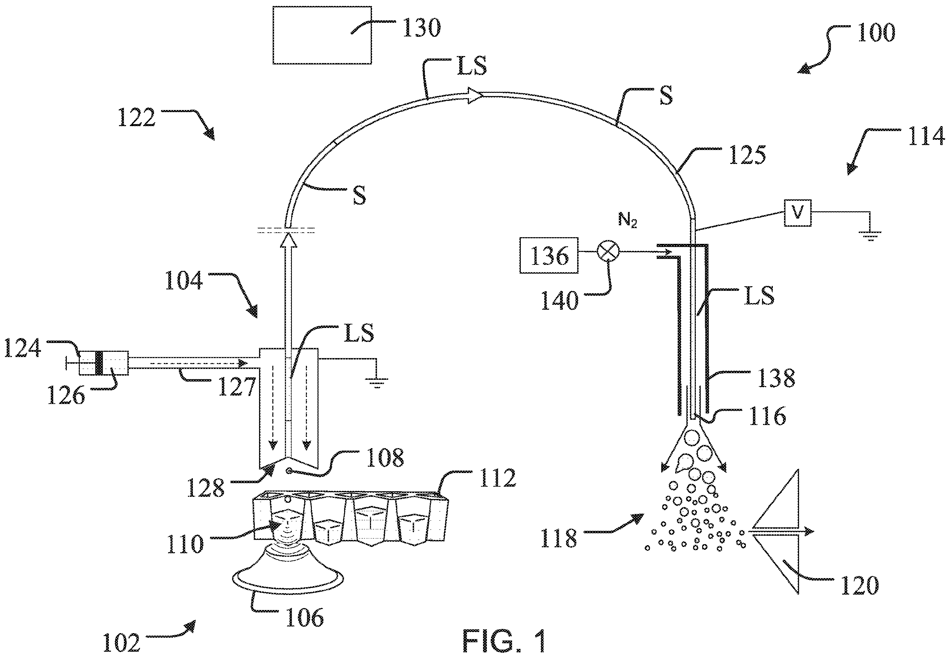

For illustrative purposes, FIG. 1 is a schematic view of an example system 100 combining an acoustic droplet ejection (ADE) 102 with an OPI sampling interface 104 and an ESI source 114, along with a mass spectrometer (MS) 120. Such a system 100 may be referred to as an acoustic ejection mass spectrometry (AEMS) system 100. The AEMS system 100 may include a mass analysis instrument such MS 120 for ionizing and mass analyzing analytes received within an open end of the sampling OPI 104. Such a system 100 is described, for example, in U.S. Pat. No. 10,770,277. The ADE 102 includes an acoustic ejector 106 that is configured to eject a droplet or sample 108 from a reservoir 110 of a well plate 112 into the open end of sampling OPI 104. As shown in FIG. 1, the example system 100 generally includes the sampling OPI 104 in liquid communication with the ESI source 114 for discharging a liquid containing one or more sample analytes (e.g., via electrospray electrode 116) into an ionization chamber 118, and a mass analyzer detector (e.g., a MS depicted generally at 120) in communication with the ionization chamber 118 for downstream processing and/or detection of ions generated by the ESI source 114. Due to the configuration of the nebulizer nozzle 138 and electrospray electrode 116 of the ESI source 114, samples ejected therefrom are transformed into small-volume liquid droplets flying in a gas. A liquid handling system 122 (e.g., including one or more pumps 124 and one or more transfer conduits 125) provides for the flow of liquid from a reservoir 126 to the sampling OPI 104 and from the sampling OPI 104 to the ESI source 114. As ESI source 114 allows for the formation of multiple charged ions and are, therefore, more applicable to a variety of applications, they are described within the application for consistency. The technologies described herein, however, may also be utilized for systems that incorporate a plurality of atmospheric pressure chemical ionization (APCI) sources.

In FIG. 1, the reservoir 126 (e.g., containing a liquid, desorption solvent, a sample to be tested, etc.) can be fluidically coupled to the OPI 104 via a supply conduit 127 through which the liquid can be delivered at a selected volumetric rate by the pump 124 (e.g., a reciprocating pump, a positive displacement pump such as a rotary, gear, plunger, piston, peristaltic, diaphragm pump, or other pump such as a gravity, impulse, pneumatic, electrokinetic, and centrifugal pump), all by way of non-limiting example. As discussed in greater detail below, the flow of liquid into and out of the sampling OPI 104 occurs within a sample space accessible at the open end such that one or more droplets or samples 108 can be introduced into the liquid boundary 128 at the sample tip and subsequently delivered to the ESI source 114.

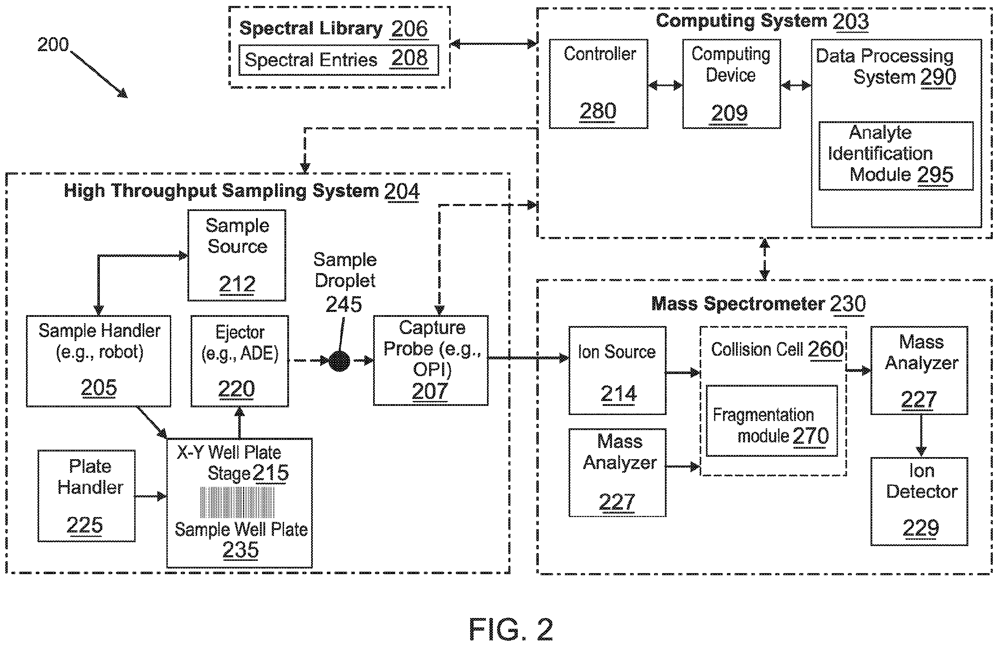

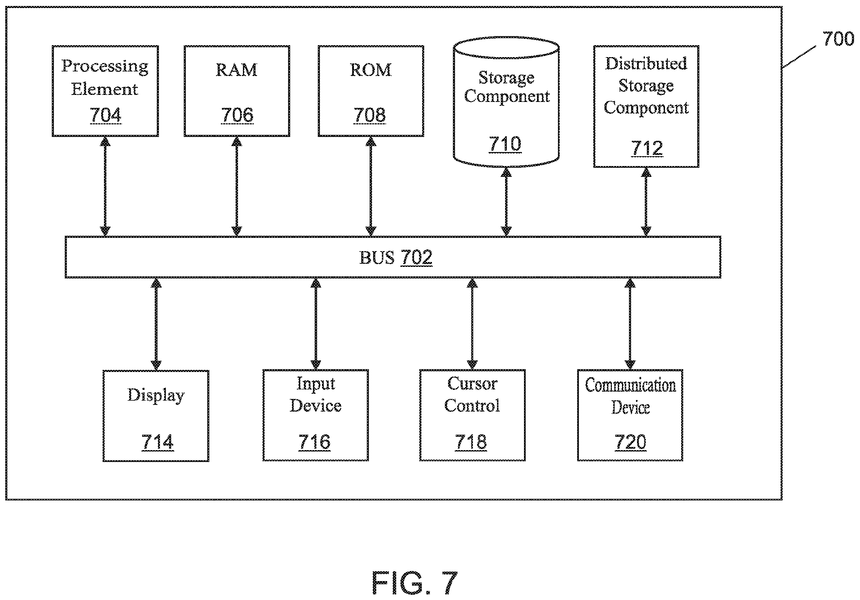

The system 100 includes an ADE 102 that is configured to generate acoustic ejection energy that is applied to a liquid contained within a reservoir 110 that causes one or more droplets or samples 108 to be ejected from the reservoir 110 into the open end of the sampling OPI 104. A controller 130 can be operatively coupled to and configured to operate any aspect of the system 100. This enables the acoustic transducer of the acoustic ejector 106 to inject droplets or samples 108 into the sampling OPI 104 as otherwise discussed herein substantially continuously, or for selected portions of an experimental protocol, by way of non-limiting example. Other types of sample introduction systems, such as gravity-based droplet systems may be utilized. ADE 102 and other non-contact ejection systems may be advantageous because of the high sample throughput that may be achieved. Controller 130 can be, but is not limited to, a microcontroller, a computer, a microprocessor, or any device capable of sending and receiving control signals and data, as described below with respect to the computing device illustrated in, e.g., FIG. 2 or FIG. 7. Wired or wireless connections between the controller 130 and the remaining elements of the system 100 are not depicted but would be apparent to a person of skill in the art.

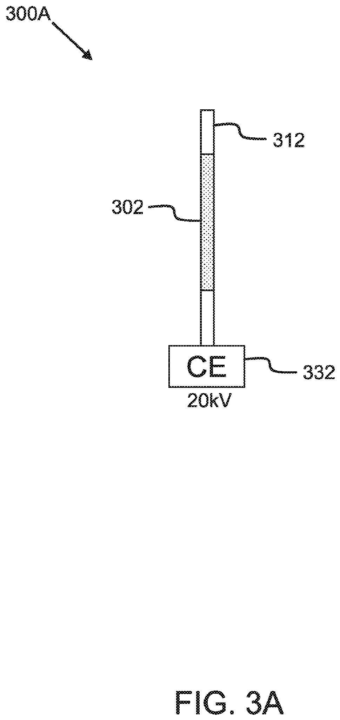

Although an ADE 102 is illustrated as being the source of samples provided to the OPI 104, other sample sources may be used in accordance with examples of the disclosure. In various examples of the disclosure, such sample sources may be, e.g., a capillary electrophoresis (CE) capillary outlet, as discussed below with respect to FIGS. 3A-3C.

As shown in FIG. 1, the ESI source 114 (when utilized) can include a source 136 of pressurized gas (e.g., nitrogen, air, or a noble gas) that supplies a high velocity nebulizing gas flow to the nebulizer nozzle 138 that surrounds the outlet tip of the electrospray electrode 116. As depicted, the electrospray electrode 116 protrudes from a distal end of the nebulizer nozzle 138. The pressured gas interacts with the liquid discharged from the electrospray electrode 116 to enhance the formation of the sample plume and the ion release within the plume for sampling by mass analyzer detector 120, e.g., via the interaction of the high-speed nebulizing flow and jet of liquid sample (e.g., analyte-solvent dilution). The liquid discharged may include liquid samples LS received from at least one reservoir 110 of the well plate 112. The liquid samples LS are diluted with the solvent S and typically separated from other samples by volumes of the solvent S (hence, as flow of the solvent S moves the liquid samples LS from the OPI 104 to the ESI source 114, the solvent S may also be referred to herein as a transport liquid). The nebulizer gas can be supplied at a variety of flow rates, for example, a flow rate in a range from about 0.1 L/min to about 40 L/min, which can also be controlled under the influence of controller 130 (e.g., via opening and/or closing valve 140).

It will be appreciated that the flow rate of the nebulizer gas can be adjusted (e.g., under the influence of controller 130) such that the flow rate of liquid within the sampling OPI 104 can be adjusted based, for example, on suction/aspiration force generated by the interaction of the nebulizer gas and the analyte-solvent dilution as it is being discharged from the electrospray electrode 116 (e.g., due to the Venturi effect/shock formation). The ionization chamber 118 can be maintained at atmospheric pressure, though in some examples, the ionization chamber 118 can be evacuated to a pressure lower than atmospheric pressure.

It will also be appreciated by a person skilled in the art and in light of the teachings herein that the mass analyzer detector 120 can have a variety of configurations. Generally, the mass analyzer detector 120 is configured to process (e.g., filter, sort, dissociate, detect, etc.) sample ions generated by the ESI source 114. By way of non-limiting example, the mass analyzer detector 120 can be a triple quadrupole mass spectrometer, or any other mass analyzer known in the art and modified in accordance with the teachings herein. Other non-limiting, exemplary mass spectrometer systems that can be modified in accordance with various aspects of the systems, devices, and methods disclosed herein can be found, for example, in an article entitled "Product ion scanning using a Q-q-Q linear ion trap (Q TRAP) mass spectrometer," authored by James W. Hager and J. C. Yves Le Blanc and published in Rapid Communications in Mass Spectrometry (2003; 17: 1056-1064); and U.S. Pat. No. 7,923,681, entitled "Collision Cell for Mass Spectrometer".

Other configurations, including but not limited to those described herein and others known to those skilled in the art, can also be utilized in conjunction with the systems, devices, and methods disclosed herein. For instance, other suitable mass spectrometers include single quadrupole, triple quadrupole, ToF, trap, and hybrid analyzers. It will further be appreciated that any number of additional elements can be included in the system 100 including, for example, an ion mobility spectrometer (e.g., a differential mobility spectrometer) that may be disposed between the ionization chamber 118 and the mass analyzer detector 120 and configured to separate ions based on their mobility difference in high-field and low-field). Additionally, it will be appreciated that the mass analyzer detector 120 can include a detector that can detect the ions that pass through the analyzer detector 120 and can, for example, supply a signal indicative of the number of ions per second that are detected.

FIG. 2 is a schematic diagram illustrating the operation of an example system combining acoustic droplet ejection (ADE) with an open port interface (OPI) sampling interface and electrospray ionization (ESI) source. In the illustrated example, the system 200 is operative to perform, e.g., high-throughput mass spectrometry analysis. Similar to the system 100 of FIG. 1, the system 200 includes a sampling system 204, a MS 230, a computing system 203, and optionally a spectral library 206 that may include a plurality of spectral entries 208.

In various aspects, the sampling system 204 may include at least one of a sample source 212 (similar to the reservoir 110 or well plate 112 of FIG. 1), a sample handler 205, a capture probe 207, an X-Y well plate stage 215, an ejector 220, and a plate handler 225. The sample source 212 and the sample handler 205 are operative to retrieve collections of samples from the sample source 212 and to deliver the retrieved collections to capture locations associated with sample capture probe 207. The system 200 may be operative to independently capture selected ones of the plurality of samples at the capture locations, e.g., capture probe 207, to optionally dilute the samples and to transfer the captured samples to MS 230 for mass analysis. In some examples, the sample source 212 may include a set of well plates in a storage housing and/or liquid for adding to well plates 235. The sample source 212 may include part of a liquid handling system that manipulates and/or injects liquid into the well plates 235. The sample handler 205 includes one or more electro-mechanical devices (e.g., robotics, conveyor belts, stages, and the like) that are capable of transferring samples (e.g., well plates) from the sample source 212 to other components of the sampling system 204 and/or to other components, such as the ejector 220 and/or the capture probe 207. As an example, the sample handler 205 may transfer a sample well plate 235 to the ejector 220 or the plate handler 225.

In various aspects, the ejector 220 is operable to eject droplets of samples 245 from the wells of the well plate 235. The size of the droplet or sample may typically be from 1 to 25 nanoliters. The ejector 220 may be any type of suitable ejector, such as an acoustic ejector, a pneumatic ejector, or another type of contactless ejector. In an example, the plate handler 225 receives a well plate 235 from the sample handler 205. The plate handler 225 transports the well plate 235 to a capture location that may be aligned with the capture probe 207. Once in the capture location, the ejector 220 ejects droplets 245 from one or more wells of the well plate 235. The plate handler 225 may include one or more electro-mechanical devices, such as a translation stage 215 that translates the well plate 235 in an X-Y plane to align wells of the well plate 235 with the ejector 220 and/or or the capture probe 207.

In various aspects, the MS 230 includes at least one of an ion source (e.g., ionization source) 214, a mass analyzer 227, an ion detector 229, and a collision cell 260. The MS 230 can be operative, for example, through use of ion source(s) or generator(s) 214 to produce sample ions of the sample introduced into the MS 230. The collision cell 260 is operative to fragment the precursor ions produced by the ion source 214 to generate product ions (fragment ions) derived from the precursor ions. In various examples, the mass analyzer 227 may be before the collision cell. The MS 230 is further operative to filter and detect selected ions of interest from the sample ions through the use of the mass analyzer 227 and ion detector 229. The mass analyzer 227 is operative to analyze the sample ions and produce a mass spectrometry dataset including all ion current signals from the sample ions.

In some aspects, the MS 230 is operative to perform tandem mass spectrometry analysis through the use of the collision cell 260. The collision cell 260 may further include a fragmentation module 270 operative to apply an energy to the selected precursor ions and cause the selected precursor ions to undergo fragmentation and generate product ions. The fragmentation module 270 may include at least one of collision induced dissociation (CID), surface induced dissociation (SID), electron capture dissociation (ECD), electron transfer dissociation (ETD), metastable-atom bombardment, photo-fragmentation, or combinations thereof.

It will also be appreciated by a person skilled in the art and in light of the teachings herein that the mass analyzer 227 can have a variety of configurations. Generally, the mass analyzer 227 is operative to process (e.g., filter, sort, dissociate, detect, etc.) sample ions generated by the ion source 214. By way of non-limiting example, the mass analyzer 227 may be a triple quadrupole mass spectrometer, or any other mass analyzer known in the art and modified in accordance with the teachings herein.

In various aspects, the computing system 203 may include a computing device 209 as described above, a controller 280, and a data processing system 290. The controller 280 may be in the form of electronic signal processors and in electrical communication with other subsystems within the system 200. The controller 280 may be operative to coordinate some or all of the operations of the pluralities of the various components of the system 200. In one example, the controller 280 may be a controller for the mass spectrometer 227 and may be used as the primary controller for controlling components in addition to those components housed within the mass spectrometer 227. As such, the controller 280 may be considered the main or central controller that orchestrates, or communicates with, the other controllers to carry out the operations discussed herein in a more efficient manner.

In various aspects, the data processing system 290 may include various components and modules operative to process mass spectrometry data and to provide real-time feedback to users and other subsystems. In some examples, the data processing system 290 further includes an analyte identification module 295. The analyte identification module 295 may be operative to perform a library search and predict compound identity of a target analyte in a test sample, optionally through use of the trained machine learning algorithm. In various examples, the computing system 203 may be similar to the computing device 700 described in greater detail below with respect to FIG. 7.

In operation, the sampling system 204 (including sample source 212 and sample handler 205) can iteratively deliver independent samples from a plurality of sample sources (e.g., a droplet from a well of well plate 235) to the capture probe 207. The capture probe 207 can dilute and transport each such delivered sample to the MS 230 disposed downstream of the capture probe 207 for ionizing the diluted sample. The mass analyzer 227 can receive generated ions from the ion source 214 and/or the collision cell 260 for mass analysis. The mass analyzer 227 is operative to selectively separate ions of interest from generated ions received from the ion source 214 and to deliver the ions of interest to the ion detector 229 that generates a mass spectrometer signal indicative of detected ions to the computing system 203. In some aspects, the separate ions of interest may be indicated in an analysis instruction associated with that sample. In some aspects, the separate ions of interest may be indicated in an analysis instruction identified by an indicia physically associated with the plurality of samples.

The system 200 may include, e.g., a commercial computer in operative communication with a MS 230 and a controller for the capture probe 207, which may include, for example, a SCIEX OS computer available from SCIEX. The SCIEX OS computer includes a control controller for the capture probe 207, represented for example by SCIEX open port interface software, and a controller for the MS 230, which may be the SCIEX OS computer. The MS 230 and the controller for capture probe 207 may be further in operative communication with an ejector 220 and an X-Y well plate stage 215, which may be, for example, a liquid droplet ejector with embedded computer or processor. For the purposes of this disclosure, these distributed controller components may collectively be considered to be a system controller, and depending upon the configuration, may be centralized or distributed as is the case here. For instance, one of the controllers or controller components may send signals to the other controllers to control the respective devices.

In one particular example, the high-throughput system 200 employs the ADE-OPI-MS technology. The ADE-OPI-MS system according to the present disclosure relies on acoustic dispensing of droplets directly from the wells of the plate or sample source under analysis. The acoustically dispensed droplets, which are typically at nanoliter scale, with precise control and independent of the sample solvent, are acoustically ejected from the ejected sample and introduced to a vortex at the opening of the OPI and delivered directly to the ionization source of the MS for detection. The substantially small samples required, coupled with the method's resilience in handling unpurified samples, make this technology advantageous for direct sampling from the well plate or sample source. The ADE-OPI-MS system and method also offer significant speed advantages: with an average analysis time of 1-2 seconds per sample and a small quantity of 1-10 nanoliter per sample, such that a typical well plate containing 384 wells can be analyzed in under 15 min. Thus, the ADE-OPI-MS system advantageously enables high-throughput analysis of a large quantity of samples and generate a large volume of data within a meaning time frame such as a day. In addition, the ADE-OPI is compatible with both nominal and high-resolution mass spectrometers, allowing rapid quantification with the former, and extensive analyte identification with the latter. It should be noted that although the MS 230 is discussed herein, principles of the above examples may be applicable to any other mass analyzing device, or to any sample detection device.

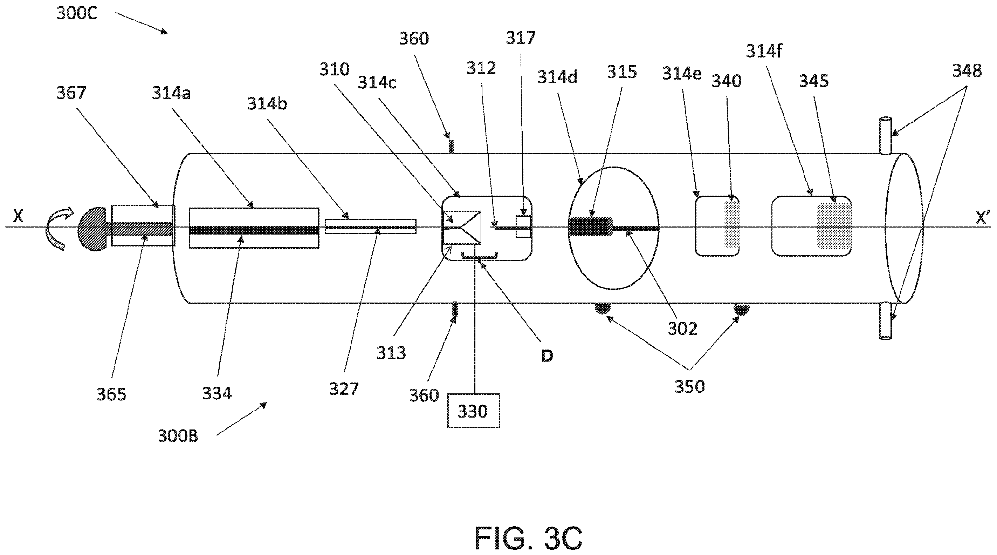

FIGS. 3A-3C illustrate a combined sample transfer system, according to various examples of the disclosure. In FIG. 3A, a first CE part 300A of the combined sample transfer system includes the transfer capillary 302, the transfer capillary 302 being coupled to a sampling device such as, e.g., CE sampling device 332. In an example, the end of the transfer capillary tip 312 has a cross-section that is substantially perpendicular to the longitudinal direction of the transfer capillary 302. In examples, as further discussed below, the first CE part 300A may be coupled to a second sample-receiving part 300B to form an integrated mechanism for, e.g., the combined sample transfer system described below with respect to FIG. 3C.

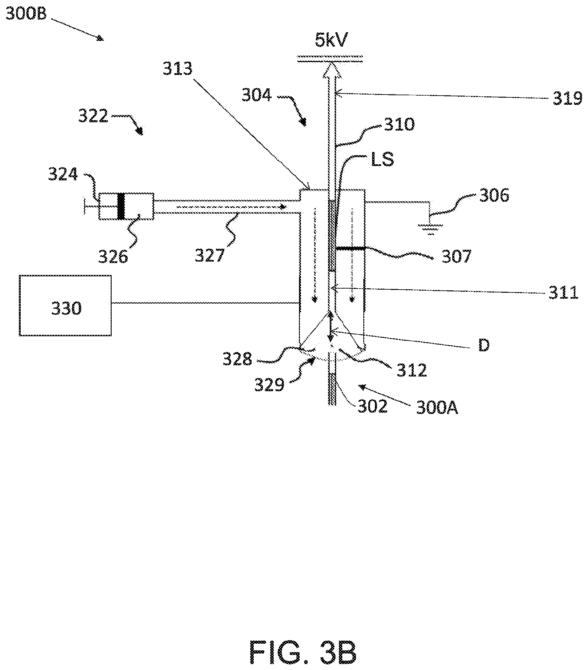

In FIG. 3B, the second sample-receiving part 300B of the combined sample transfer system, which is the OPI 304, includes a transport liquid supply system 322 having a fluid delivery pump 324, a transport liquid source 326, and a transport liquid supply conduit 327. The fluid delivery pump 324 is configured to pump transport liquid from the transport liquid supply source 326 into the transport liquid supply conduit 327 at a given flow rate. The transport liquid flows through the transport liquid supply conduit 327 towards the open end of the OPI 304, where the receiving volume 328, defined at least in part by the meniscus 329, is formed.

In further examples, the sample-receiving part 300B further includes an electrical conductor 307, which may be integrated into the transport liquid supply conduit 327 or discrete therefrom, and a first electrical contact 306 connected to the transport liquid supply conduit 327. The electrical conductor 307 connects the transport liquid supply conduit 327 to the removal conduit 310. The first electrical contact 306 is configured to ground the solvent liquid, and the electrical conductor 307 helps ensure that the removal conduit 310 is also grounded. The first electrical contact 306 may include a grounding connector, such as a metal clamp, attached to a grounding wire. In an example, as long as the tip 312 of the transfer capillary 302 is in contact with the transport liquid comprising the receiving volume 328, the eluent released from the transfer capillary 302 may be grounded via the first electrical contact 306. In examples, the transport liquid may be grounded upstream from the OPI 304, such as a supply conduit 327 or liquid source, provided the liquid is sufficiently conductive to provide an effective ground at the receiving volume 328. Thus, the two liquid circuits, e.g., the solvent liquid from the CE sampling device 332 of FIG. 3A and the transport liquid flowing from the OPI 304 in FIG. 3B, are electrically decoupled. In examples, this configuration may enable the eluent from the CE transfer capillary 302 to flow directly into the OPI 304 for dilution, and transfer of the diluted solution to, e.g., an electrospray ionization source of a mass analysis system, while isolating and maintaining the required potentials on the CE system (e.g., 20kV) and on the electrospray electrode of the mass analysis system (e.g., 5 kV).

In another example, the transport liquid supply conduit 327 and discrete fluid delivery pump 324 may be eliminated. Transport liquid is still required for proper operation of the OPI 304, however, no buffer liquid may be required to be introduced from an outlet vial of the CE sampling device 332. This buffer liquid is introduced under pressure to the OPI 304 at a junction that is separate from the transfer capillary 302. The buffer liquid may be grounded anywhere along the flow path to the OPI 304. As will be appreciated by the person of skill in the art, a separate isolation transformer may not be required depending upon the type and configuration of the power supply supporting the mass analysis system, or if separate power supplies are utilized.

In various examples, in operation, the eluent from the transfer capillary 302 may enter the removal conduit 310 at removal conduit inlet 311 and is removed through the removal conduit outlet 319 at a flow rate configured to allow the transport liquid to form the receiving volume 328 at the open end of the OPI 304. The eluent from the transfer capillary 302 is removed through the removal conduit 310 substantially without any transport liquid dripping or leaking from the open end of the OPI 304. In an example, the tip 312 of the transfer capillary 302 is disposed at a location proximate or within the open end of the OPI 304, so as to be in the receiving volume 328, illustrated in FIG. 3B, such that the eluent from the transfer capillary 302 can be released into the receiving volume 328. In an example, the removal conduit 310 is housed in a housing 313 that defines the outer surface of the OPI 304.

In examples, as illustrated in FIG. 3B, the CE part 300A and the inlet of the sample receiving part 300B are separated from each other by a distance "D." In various examples, the distance "D" is variable and adjustable, and may be adjusted so as to reduce a liquid flow velocity between the transfer capillary tip 312 and the removal conduit 310 of the OPI 304. As another example, the distance "D" may be adjusted so as to reduce the Venturi effect between the transfer capillary tip 312 and the removal conduit 310 of the OPI 304. In other examples, the distance "D" is always within the meniscus 329 so that both the tip 312 of the transfer capillary 302 and the inlet 311 of the removal conduit 310 remain in the receiving volume 328. In various examples, the sample-receiving part 300B further includes a fluid pressure sensor 330 configured to measure a pressure differential between the transfer capillary 302 and the removal conduit 310 of the OPI 304. For example, the fluid pressure sensor 330 may be a typically available pressure measurement device.

FIG. 3C illustrates a CE-OPI interface 300C with integrated elements for position adjustment and control, in accordance with various examples. In examples, FIG. 3C illustrates an interface 300C that may be used to couple the CE part 300A illustrated in FIG. 3A with the sample-receiving part 300B illustrated in FIG. 3B. Additional components utilized to adjust the distance between certain components thereof, to secure the interface 300C to a supporting structure, or otherwise enable proper function and monitoring of the resulting connection are depicted. In various examples, FIG. 3C illustrates an OPI removal conduit 310 in an OPI housing 313, which are part of the OPI 304 illustrated in FIG. 3B, located at an adjustable distance "D" from a transfer capillary tip 312. Both the OPI removal conduit 310 and the CE transfer capillary tip 312 being visible and accessible through window 314c. For example, the window 314c may include a movable sleeve 317 in which the transfer capillary 310 is at least partially enclosed, the transfer capillary tip 312 being movable with the movable sleeve 317 with respect to the transfer capillary 302.

In examples, the CE-OPI interface 300C may also include a CE capillary locking mechanism 315, visible and accessible through window 314d, that is configured to, e.g., lock a position of the movable sleeve 317, and therefore the CE transfer capillary tip 312, in a position at a desired distance "D" from the OPI removal conduit 310. In another example, the CE capillary locking mechanism 315 may be configured to lock the transfer capillary 310, e.g., along a longitudinal direction relative to the OPI, the longitudinal direction being illustrated by axis X-X' in FIG. 3C. In another example, the CE capillary locking mechanism 315 may also be configured to cause a linear movement of the transfer capillary tip 312 and/or of the transfer capillary 302 along the longitudinal direction X-X' so as to adjust the distance "D." In examples, the CE-OPI interface 300C further includes a UV light source 340, visible and accessible through window 314e, and configured to generate a UV light radiation to be applied to a sample for absorption and/or fluorescence detection during CE analysis. In further examples, the CE-OPI interface 300C may include a coolant plug 345, visible and accessible through window 314f, configured to provide temperature control during CE analysis, the coolant plug 345 being coupled to, e.g., one or more coolant sleeves 348 configured to provide coolant to the coolant plug 345. In further examples, the CE-OPI interface 300C includes one or more mounting devices 350 such as, e.g., mounting magnets 350, configured to mount the CE-OPI interface 300C to a mass analyzer detector such as, e.g., the mass analyzer detector 120 discussed above with respect to FIG. 1.

In other examples, the CE-OPI interface 300C includes one or more conductive pins or screws 360 connected to, e.g., an electrical conductor such as electrical conductor 307 (as discussed above with respect to FIG. 3B). In a further example, the CE-OPI interface 300C includes a transport liquid input 327, visible and accessible through window 314b, and configured to provide liquid such as, e.g., an eluent, to the OPI removal conduit 310. In further examples, the CE-OPI interface 300C includes a distance adjusting device or distance adjustment mechanism 365 configured to adjust the distance between the removal conduit 310 and the CE transfer capillary tip 312. For example, the distance adjustment mechanism 365 is configured to move the housing 313 of the removal conduit 310 along the X-X' longitudinal direction, while the transfer capillary tip 312 and/or the transfer capillary 302 remain in a set position. In other examples, the distance adjustment mechanism 365 may move the removal conduit 310 and the CE capillary locking mechanism 315 may move the transfer capillary tip 312 along the X-X's direction within the interface 300C. In various examples, the transfer capillary tip 312 and/or the removal conduit inlet 310 may be movable in a longitudinal direction of the OPI, illustrated by axis X-X' in FIG. 3C, or in a direction perpendicular to the longitudinal direction X-X'.

In examples, the distance adjusting device 365 may include a housing 367 secured to at least one of the OPI housing 313 and to, e.g., a sampling device (not shown) such as, e.g., a syringe or other injection sampling device. The distance adjusting device 365 may be or include an adjustable screw 365 configured to push against a back portion of the housing 313 of the OPI removal conduit 310 via connecting rod 334, visible and accessible through window 314a, the connecting rod 334 thus translating a rotation of the adjustable screw 365 to a linear movement of the OPI housing 313 and thus of the removal conduit inlet 310 with respect to the CE transfer capillary tip 312. For example, the removal conduit inlet 310 may linearly advance about 0.5 mm for every 360° rotation of the adjustable screw 365. In other examples, coupled with fluid pressure sensor 330, the distance adjusting device/adjustable screw 365 is configured to adjust the distance "D" based on the pressure differential measured by the fluid pressure sensor 330. In another example, the distance adjusting device or adjustable screw 365 is configured to adjust the distance "D" so as to minimize the pressure measured by the fluid pressure sensor 330.

It is to be noted that although FIG. 3C depicts the distance adjusting device or adjustable screw 365 being movably secured to the housing 313 of the OPI removal conduit 310, in various other examples, the adjustable screw 365 may be movably secured to the transfer capillary tip 312 by being located on a side of the transfer capillary 302, i.e., on an opposite of the CE-OPI interface 300C illustrated in FIG. 3C. In such an example, the adjustable screw 365 may be movably secured to the transfer capillary 302, and a rotation of the adjustable screw 365 may result in a linear movement of the transfer capillary 302, e.g., independently from any movement of the transfer capillary tip 312. In another example, the adjustable screw 365 may be movably secured to the transfer capillary tip 312, and a rotation of the adjustable screw 365 may result in a linear movement of the transfer capillary tip 312, e.g., independently from any movement of the transfer capillary 302.

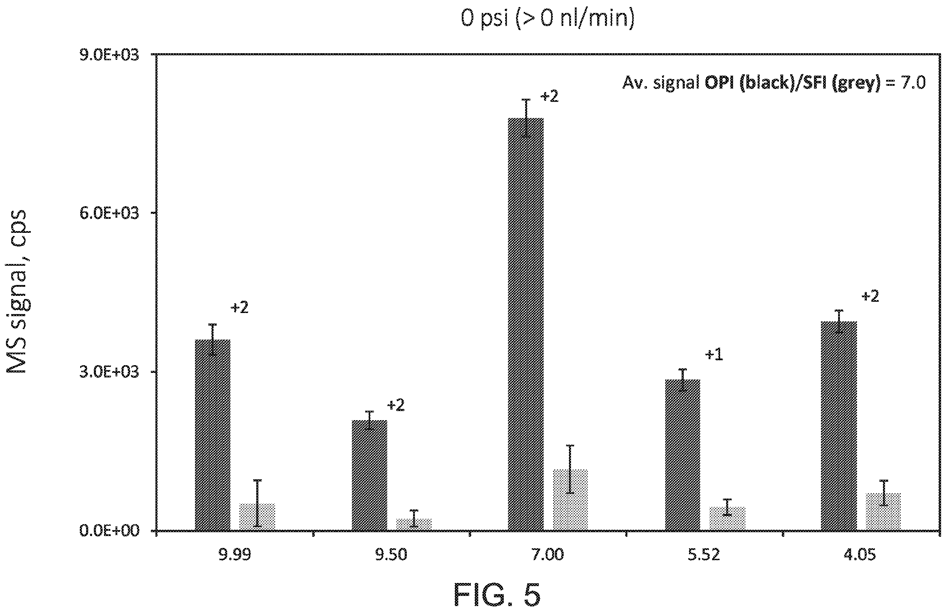

FIG. 4 is an illustration 400 of fluid flow modeling in an OPI interface, according to various examples of the disclosure. In FIG. 4, the illustration 400 includes panes A, B, and C, each pane representing the profile or trace of a droplet 420 arriving at the inlet of the removal conduit 410. For example, the droplet 420 arrives at the inlet of removal conduit 410. For example, in pane A, the droplet profile or trace 420 has a shape that is substantially similar to the shape of a spherical droplet as it just arrives at the inlet of the removal conduit 410. Pane B illustrates a droplet profile or trace 430 of a sample droplet as it starts traveling, stretching and diluting through the removal conduit 410. Pane C illustrates another droplet profile or trace 440 of a sample droplet as it travels, stretches and dilutes through the removal conduit 410. In examples where each of panes A-C depict the same droplet 420, by examining the time stamp at the bottom of each pane A, B and C in FIG. 4, it is possible to determine that there is a velocity gradient within the OPI removal conduit 410. For example, the time difference between panes A and B is 1 ms while the time difference between panes B and C is 5 ms. The distance traveled by the droplet between panes A and B in 1 ms is greater than the distance traveled by the droplet between panes B and C in 5 ms. Accordingly, the flow velocity of the droplet 440 is highest in the vicinity of the OPI inlet of the removal conduit 410 illustrated in pane A compared to inside the removal conduit 410 as illustrated in panes B and C. In examples, the net effect of the velocity gradient is that when the CE capillary is inserted into the OPI port, as illustrated in FIG. 3B above, and the CE capillary 302 is positioned in a location that abuts the removal conduit 310 (410 in FIG. 4) of the OPI, the flow velocity past the CE capillary tip 312 and at the inlet of the removal conduit 310 (410 in FIG. 4) is at a maximum. This flow can act substantially like a Venturi, and draw liquid flow through the CE capillary, as further illustrated in FIG. 5 discussed below.

FIG. 5 is an illustration of the siphoning effect in the OPI interface, according to various examples of the disclosure. In FIG. 5, which illustrates the mass spectrometry (MS) signal of five (5) pI markers obtained by a direct infusion of their mixture from the separation capillary to OPI, the inlet of the CE capillary is immersed in a sample vial containing a series of markers for isoelectric focusing (IEF). The signal corresponds to the intensity of the most abundant charge states, which are indicated on top. In this case, no pressure is applied on the CE inlet, and no CE potential is applied. Here, the CE tip is placed in the volume of the OPI port. As a consequence of not having any pressure applied, it may be expected that the sample would not flow into the CE capillary and would not pass through to the OPI port. However, with both the OPI configuration (abutted capillary, in the darker shading) and for the standard sheath or laminar flow (in the lighter shading), there is clear indication of a drawing or siphoning force and of a liquid flow moving past the CE capillary tip at a given velocity. In the case of the OPI, as illustrated in FIG. 5, the height difference between the darker shading illustrative of the abutted capillary and the light shading illustrative of standard sheath or laminar flow clearly shows that the measured signal for the markers is about seven times (7X) higher for the abutted capillary configuration than for the sheath flow configuration. Accordingly, FIG. 5 shows that in the absence of applied pressure the signal from pI is in average seven (7) times higher in OPI than that in standard sheath flow, indicating much greater Venturi effect created by OPI. This substantially difference suggests that the siphoning effect is substantially stronger with the OPI than with the standard sheath or laminar flow. In various examples, the observed strong Venturi pull and non-zero hydrodynamic flow that is created and illustrated in FIG. 5 may worsen the resolution of the analytes in a CE-OPI-MS arrangement due to peak distortion caused by the parabolic profile of the corresponding flow. The worsening of the resolution may be confirmed experimentally by comparing the average resolution for marker peaks when running IEF experiments with the OPI and with the sheath flow configurations. Accordingly, providing an apparatus that minimized, reduces or eliminates the Venturi effect is advantageous.

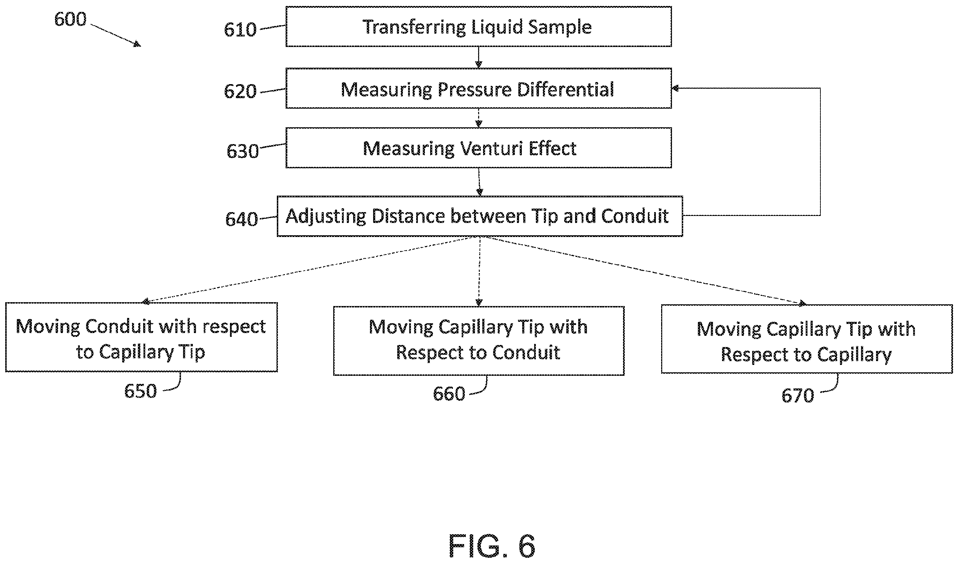

FIG. 6 is a flow chart illustrating an example method for processing a liquid sample, according to various examples of the disclosure. In various examples, operation 610 includes transferring the liquid sample from a transfer capillary, such as, e.g., the transfer capillary of a CE device, to an OPI removal conduit. For example, transferring the liquid sample may be performed via a removal conduit inlet of the OPI, the removal conduit inlet at least partially defining a receiving volume limited by a meniscus. In examples, the transfer capillary includes a transfer capillary tip that is in fluid communication with the receiving volume inside the meniscus, and the transfer capillary tip is at a distance from the removal conduit inlet inside the meniscus.

In various examples, operation 620 includes measuring a pressure differential between the removal conduit of the OPI and the transfer capillary tip of the CE device. For example, measuring the pressure differential includes using a pressure measuring device, but may also be performed using other like methods. In examples, operation 630 includes determining a Venturi effect of the liquid sample between the removal conduit inlet and the transfer capillary tip. For example, determining the Venturi effect may also be performed based on the determined pressure difference between the removal conduit of the OPI and the transfer capillary tip of the CE device.

In various examples, operation 640 includes adjusting the distance between the transfer capillary tip and the removal conduit inlet based on the measured pressure differential. For example, adjusting the distance during operation 640 may be performed to substantially reduce or eliminate the measured pressure differential or the determined Venturi effect, or both, between the removal conduit of the OPI and the transfer capillary tip of the CE device.

In examples, operation 650 includes, in order to adjust the distance between the removal conduit of the OPI and the transfer capillary tip of the CE device, moving the removal conduit with respect to the transfer capillary tip inside the meniscus. In other examples, operation 660 includes, in order to adjust the distance between the transfer capillary tip and the removal conduit, moving the transfer capillary with respect to the removal conduit inside the meniscus. In various other examples, operation 670 includes, in order to adjust the distance between the transfer capillary tip and the removal conduit, moving the transfer capillary tip with respect to the transfer capillary inside the meniscus. In other examples, adjusting the distance between the transfer capillary tip and the removal conduit may be performed by moving one of the transfer capillary, the transfer capillary tip and the removal conduit, as discussed above with respect to operations 650-670, in one of a longitudinal direction of the OPI and in a direction perpendicular to the longitudinal direction of the OPI.

FIG. 7 depicts a block diagram of a computing device similar to the computing system 203 discussed above with respect to FIG. 2. In the illustrated example, the computing device 700 may include a bus 702 or other communication mechanism of similar function for communicating information, and at least one processing element 704 (collectively referred to as processing element 704) coupled with bus 702 for processing information. As will be appreciated by those skilled in the art, the processing element 704 may include a plurality of processing elements or cores, which may be packaged as a single processor or in a distributed arrangement. Furthermore, a plurality of virtual processing elements 704 may be included in the computing device 700 to provide the control or management operations for, e.g., the mass analysis systems 100 and 200 illustrated above.

The computing device 700 may also include one or more volatile memory(ies) 706, which can for example include random access memory(ies) (RAM) or other dynamic memory component(s), coupled to one or more busses 702 for use by the at least one processing element 704. Computing device 700 may further include static, non-volatile memory(ies) 708, such as read only memory (ROM) or other static memory components, coupled to busses 702 for storing information and instructions for use by the at least one processing element 704. A storage component 710, such as a storage disk or storage memory, may be provided for storing information and instructions for use by the at least one processing element 704. As will be appreciated, the computing device 700 may include a distributed storage component 712, such as a networked disk or other storage resource available to the computing device 700.

The computing device 700 may be coupled to one or more displays 714 for displaying information to a user. Optional user input device(s) 716, such as a keyboard and/or touchscreen, may be coupled to Bus 702 for communicating information and command selections to the at least one processing element 704. An optional cursor control or graphical input device 718, such as a mouse, a trackball or cursor direction keys for communicating graphical user interface information and command selections to the at least one processing element. The computing device 700 may further include an input/output (I/O) component, such as a serial connection, digital connection, network connection, or other input/output component for allowing intercommunication with other computing components and the various components of, e.g., the mass analysis systems 100 and 200 discussed above.

In various examples, computing device 700 can be connected to one or more other computer systems via a network to form a networked system. Such networks can for example include one or more private networks or public networks, such as the Internet. In the networked system, one or more computer systems can store and serve the data to other computer systems. The one or more computer systems that store and serve the data can be referred to as servers or the cloud in a cloud computing scenario. The one or more computer systems can include one or more web servers, for example. The other computer systems that send and receive data to and from the servers or the cloud can be referred to as client or cloud devices, for example. Various operations of, e.g., the mass analysis systems 100 and 200 may be supported by operation of the distributed computing systems.

The computing device 209 discussed above with respect to FIG. 2, similar to the computing device 700, may be operative to control operation of the components of the mass analysis system 200 and the sampling system 204 through a communication device such as, e.g., communication device 720, and to handle data generated by components of the mass analysis system 200 through the data processing system 200. In some examples, analysis results are provided by the computing device 700 in response to the at least one processing element 704 executing instructions contained in memory 706 or 708 and performing operations on data received from the mass analysis system 200. Execution of instructions contained in memory 706 and/or 708 by the at least one processing element 704 can render, e.g., the mass analysis systems 100 and 200 and associated sample delivery components operative to perform methods described herein.

The term "computer-readable medium" as used herein refers to any media that participates in providing instructions to the processing element 704 for execution. Such a medium may take many forms, including but not limited to, non-volatile media, volatile media, and transmission media. Non-volatile media includes, for example, optical or magnetic disks, such as disk storage 710. Volatile media includes dynamic memory, such as memory 706. Transmission media includes coaxial cables, copper wire, and fiber optics, including the wires that include bus 702.

Common forms of computer-readable media or computer program products include, for example, a floppy disk, a flexible disk, hard disk, magnetic tape, or any other magnetic medium, a CD-ROM, digital video disc (DVD), a Blu-ray Disc, any other optical medium, a thumb drive, a memory card, a RAM, PROM, and EPROM, a FLASH-EPROM, any other memory chip or cartridge, or any other tangible medium from which a computer can read.

Various forms of computer readable media may be involved in carrying one or more sequences of one or more instructions to the processing element 704 for execution. For example, the instructions may initially be carried on the magnetic disk of a remote computer. The remote computer can load the instructions into its dynamic memory and send the instructions over a telephone line using a modem. A modem local to computing device 700 can receive the data on the telephone line and use an infra-red transmitter to convert the data to an infra-red signal. An infra-red detector coupled to bus 702 can receive the data carried in the infra-red signal and place the data on bus 702. Bus 702 carries the data to memory 706, from which the processing element 704 retrieves and executes the instructions. The instructions received by memory 706 and/or memory 708 may optionally be stored on storage device 710 either before or after execution by the processing element 704.

The scope of the technology is defined by the following claims.

## Claims

1. A sample processing system (100) comprising:
an open port interface (OPI) (104) comprising a removal conduit (310), the removal conduit (310) comprising a removal conduit inlet (311) and a removal conduit outlet (319) and being configured to transport a liquid between the OPI (104) and a downstream device via the removal conduit outlet (319);
a fluid delivery pump (324) configured to provide a liquid flow to the OPI (104); **characterized by**
a transfer capillary (302) in fluid communication with the removal conduit inlet (311), the transfer capillary (302) comprising a transfer capillary tip (312) located at a distance from the removal conduit inlet (311); and
a distance adjusting device (365) configured to adjust the distance between the transfer capillary tip (312) and the removal conduit inlet (311).

2. The system (100) of claim 1, wherein:
the removal conduit inlet (311) at least partially defines a receiving volume limited by a meniscus; and
the transfer capillary tip (312) is in fluid contact with the receiving volume inside the meniscus and/or
wherein the distance adjusting device is configured to adjust the distance between the transfer capillary tip (312) and the removal conduit inlet (311) inside the meniscus.

3. The system (100) of any one of claims 1 or 2, further comprising:
a fluid pressure sensor configured to measure a pressure differential between the transfer capillary (302) and the removal conduit (310);
wherein the distance adjusting device is configured to adjust the distance based on the measured pressure differential, optionally,
wherein the distance adjusting device is configured to adjust the distance so as to substantially eliminate the measured pressure differential.

4. The system (100) of any one of claims 1-3, wherein the transfer capillary (302) is in fluid communication with a sampling device on a side thereof opposite the transfer capillary tip (312), optionally,
wherein the distance adjusting device comprises a housing secured to at least one of the OPI (104) and to the sampling device.

5. The system (100) of any one of claims 1-4, wherein:
the transfer capillary (302) and the transfer capillary tip (312) are enclosed within a movable sleeve, the transfer capillary tip (312) being movable with respect to the transfer capillary (302) within the movable sleeve; and
the distance adjusting device is movably secured to the transfer capillary tip (312), optionally,
wherein:
the distance adjusting device comprises a rotating screw movably secured to the transfer capillary tip (312); and
a rotation of the rotating screw results in a linear movement of the transfer capillary tip (312) with respect to the transfer capillary (302).

6. The system (100) of any one of claims 1-5, wherein the distance adjusting device is movably secured to the removal conduit inlet (311), optionally,
wherein:
the distance adjusting device comprises a rotating screw movably secured to the removal conduit inlet (311); and
a rotation of the rotating screw results in a linear movement of the removal conduit inlet (311) with respect to the transfer capillary tip (312).

7. The system (100) of any one of claims 1-6, wherein the distance adjusting device is movably secured to the transfer capillary (302), optionally,
wherein:
the distance adjusting device comprises a rotating screw movably secured to the transfer capillary (302); and
a rotation of the rotating screw results in a linear movement of the transfer capillary tip (312) with respect to the removal conduit inlet (311).

8. The system (100) of any one of claims 1-7, wherein one of the transfer capillary (302), the transfer capillary tip (312) and the removal conduit inlet (311) is movable in one of a longitudinal direction of the OPI (104) and in a direction perpendicular to the longitudinal direction of the OPI (104).

9. The system (100) of any one of claims 1-8, further comprising a locking mechanism configured to lock the transfer capillary (302) in a longitudinal direction of the OPI (104).

10. The system (100) of any one of claims 1-9, wherein an end of the transfer capillary tip (312) has a cross-section that is substantially perpendicular to a longitudinal direction thereof.

11. A method for processing a liquid sample, the method comprising:
transferring the liquid sample from a transfer capillary (302) to an OPI (104) removal conduit (310) via a removal conduit inlet (311), the removal conduit inlet (311) at least partially defining a receiving volume limited by a meniscus, the transfer capillary (302) comprising a transfer capillary tip (312) in fluid communication with the receiving volume inside the meniscus, wherein the transfer capillary tip (312) is at a distance from the removal conduit inlet (311) inside the meniscus;
measuring a pressure differential between the removal conduit (310) and the transfer capillary tip (312); and
adjusting the distance between the transfer capillary tip (312) and the removal conduit inlet (311) based on the measured pressure differential.

12. The method of claim 11, wherein measuring the pressure differential further comprises determining a Venturi effect of the liquid sample between the removal conduit inlet (311) and the transfer capillary tip (312), optionally,
wherein adjusting the distance comprises adjusting the distance to substantially eliminate one of the measured pressure differential and the determined Venturi effect.

13. The method of any one of claims 11-12, wherein adjusting the distance comprises moving the removal conduit (310) with respect to the transfer capillary tip (312) inside the meniscus.

14. The method of any one of claims 11-13, wherein adjusting the distance comprises moving the transfer capillary tip (312) with respect to the transfer capillary inside the meniscus and/or
wherein adjusting the distance comprises moving the transfer capillary with respect to the removal conduit (310) inside the meniscus.

15. The method of any one of claims 11-14, wherein adjusting the distance comprises moving one of the transfer capillary, the transfer capillary tip (312) and the removal conduit (310) in one of a longitudinal direction of the OPI (104) and in a direction perpendicular to the longitudinal direction of the OPI (104).

## Patentansprüche

1. Probenverarbeitungssystem (100), das Folgendes umfasst:
eine offene Portschnittstelle (OPI) (104), umfassend eine Abführleitung (310), wobei die Abführleitung (310) einen Abführleitungseinlass (311) und einen Abführleitungsauslass (319) umfasst und dazu konfiguriert ist, eine Flüssigkeit zwischen der OPI (104) und einer stromabwärts angeordneten Vorrichtung über den Abführleitungsauslass (319) zu transportieren;
eine Fluidzufuhrpumpe (324), die dazu ausgelegt ist, der OPI (104) einen Flüssigkeitsstrom bereitzustellen, **gekennzeichnet durch**
eine Transferkapillare (302), die in Fluidverbindung mit dem Abführleitungseinlass (311) steht, wobei die Transferkapillare (302) eine Transferkapillarenspitze (312) umfasst, die in einem Abstand von dem Abführleitungseinlass (311) angeordnet ist; und
eine Abstandseinstellvorrichtung (365), die dazu konfiguriert ist, den Abstand zwischen der Transferkapillarenspitze (312) und dem Abführleitungseinlass (311) einzustellen.

2. System (100) nach Anspruch 1, wobei:
der Abführleitungseinlass (311) mindestens teilweise ein Aufnahmevolumen definiert, das durch einen Meniskus begrenzt ist; und
die Transferkapillarenspitze (312) in Fluidkontakt mit dem innerhalb des Meniskus befindlichen Aufnahmevolumen steht und/oder
wobei die Abstandseinstellvorrichtung dazu konfiguriert ist, den Abstand zwischen der Transferkapillarenspitze (312) und dem Abführleitungseinlass (311) innerhalb des Meniskus einzustellen.

3. System (100) nach einem der Ansprüche 1 oder 2, weiter umfassend:
einen Fluiddrucksensor, der dazu konfiguriert ist, eine Druckdifferenz zwischen der Transferkapillare (302) und der Abführleitung (310) zu messen;
wobei die Abstandseinstellvorrichtung dazu konfiguriert ist, den Abstand auf Grundlage der gemessenen Druckdifferenz einzustellen, optional,
wobei die Abstandseinstellvorrichtung dazu konfiguriert ist, den Abstand so einzustellen, dass die gemessene Druckdifferenz im Wesentlichen beseitigt wird.

4. System (100) nach einem der Ansprüche 1 bis 3, wobei die Transferkapillare (302) auf einer ihrer Seiten, die der Transferkapillarspitze (312) gegenüberliegt, in Fluidverbindung mit einer Probenahmevorrichtung steht, optional,
wobei die Abstandseinstellvorrichtung ein Gehäuse umfasst, das an zumindest einer der OPI (104) und der Probenahmevorrichtung befestigt ist.

5. System (100) nach einem der Ansprüche 1 bis 4, wobei:
die Transferkapillare (302) und die Transferkapillarenspitze (312) innerhalb einer beweglichen Hülse eingeschlossen sind, die Transferkapillarenspitze (312) innerhalb der beweglichen Hülse relativ zu der Transferkapillare (302) bewegbar ist; und
die Abstandseinstellvorrichtung beweglich an der Transferkapillarenspitze (312) befestigt ist, optional,
wobei:
die Abstandseinstellvorrichtung eine Drehschraube umfasst, die beweglich an der Transferkapillarenspitze (312) befestigt ist; und
eine Drehung der Drehschraube eine lineare Bewegung der Transferkapillarenspitze (312) relativ zu der Transferkapillare (302) bewirkt.

6. System (100) nach einem der Ansprüche 1 bis 5, wobei die Abstandseinstellvorrichtung beweglich an dem Abführleitungseinlass (311) befestigt ist, optional,
wobei:
die Abstandseinstellvorrichtung eine Drehschraube umfasst, die beweglich an dem Abführleitungseinlass (311) befestigt ist; und
eine Drehung der Drehschraube eine lineare Bewegung des Abführleitungseinlasses (311) relativ zu der Transferkapillarenspitze (312) bewirkt.

7. System (100) nach einem der Ansprüche 1 bis 6, wobei die Abstandseinstellvorrichtung beweglich an der Transferkapillare (302) befestigt ist, optional,
wobei:
die Abstandseinstellvorrichtung eine Drehschraube umfasst, die beweglich an der Transferkapillare (302) befestigt ist; und
eine Drehung der Drehschraube eine lineare Bewegung der Transferkapillarenspitze (312) relativ zu dem Abführleitungseinlass (311) bewirkt.

8. System (100) nach einem der Ansprüche 1 bis 7, wobei eines von der Transferkapillare (302), der Transferkapillarenspitze (312) und dem Abführleitungseinlass (311) in einer von einer Längsrichtung der OPI (104) und einer Richtung senkrecht zu der Längsrichtung der OPI (104) bewegbar ist.

9. System (100) nach einem der Ansprüche 1 bis 8, weiter umfassend einen Verriegelungsmechanismus, der dazu konfiguriert ist, die Transferkapillare (302) in einer Längsrichtung der OPI (104) zu verriegeln.

10. System (100) nach einem der Ansprüche 1 bis 9, wobei ein Ende der Transferkapillarenspitze (312) einen Querschnitt aufweist, der im Wesentlichen senkrecht zu einer Längsrichtung davon ist.

11. Verfahren zum Verarbeiten einer Flüssigkeitsprobe, wobei das Verfahren Folgendes umfasst:
Überführen der Flüssigkeitsprobe aus einer Transferkapillare (302) in eine Abführleitung (310) einer OPI (104) über einen Abführleitungseinlass (311), wobei der Abführleitungseinlass (311) mindestens teilweise ein Aufnahmevolumen definiert, das durch einen Meniskus begrenzt ist, wobei die Transferkapillare (302) eine Transferkapillarenspitze (312) umfasst, die in Fluidverbindung mit dem innerhalb des Meniskus befindlichen Aufnahmevolumen steht, wobei die Transferkapillarenspitze (312) innerhalb des Meniskus in einem Abstand von dem Abführleitungseinlass (311) angeordnet ist;
Messen einer Druckdifferenz zwischen der Abführleitung (310) und der Transferkapillarenspitze (312); und
Einstellen des Abstands zwischen der Transferkapillarenspitze (312) und dem Abführleitungseinlass (311) auf Grundlage der gemessenen Druckdifferenz.

12. Verfahren nach Anspruch 11, wobei das Messen der Druckdifferenz weiter das Bestimmen eines Venturi-Effekts der Flüssigkeitsprobe zwischen dem Abführleitungseinlass (311) und der Transferkapillarenspitze (312) umfasst, optional,
wobei das Einstellen des Abstands das Einstellen des Abstands umfasst, um im Wesentlichen eines von der gemessenen Druckdifferenz und dem bestimmten Venturi-Effekt zu beseitigen.

13. Verfahren nach einem der Ansprüche 11 bis 12, wobei das Einstellen des Abstands das Bewegen der Abführleitung (310) relativ zu der Transferkapillarenspitze (312) innerhalb des Meniskus umfasst.

14. Verfahren nach einem der Ansprüche 11 bis 13, wobei das Einstellen des Abstands das Bewegen der Transferkapillarenspitze (312) relativ zu der Transferkapillare innerhalb des Meniskus umfasst und/oder
wobei das Einstellen des Abstands das Bewegen der Transferkapillare relativ zu der Abführleitung (310) innerhalb des Meniskus umfasst.

15. Verfahren nach einem der Ansprüche 11 bis 14, wobei das Einstellen des Abstands das Bewegen einer der Transferkapillare, der Transferkapillarenspitze (312) und der Abführleitung (310) in einer von einer Längsrichtung der OPI (104) und einer Richtung senkrecht zu der Längsrichtung der OPI (104) umfasst.

## Revendications

1. Système (100) de traitement d'échantillons comprenant :
une interface de port ouvert (OPI) (104) comprenant un conduit d'évacuation (310), le conduit d'évacuation (310) comprenant une entrée (311) de conduit d'évacuation et une sortie (319) de conduit d'évacuation et étant configuré pour transporter un liquide entre l'OPI (104) et un dispositif en aval via la sortie (319) de conduit d'évacuation ;
une pompe d'alimentation en fluide (324) configurée pour fournir un écoulement de liquide à l'OPI (104), **caractérisé par**
un capillaire de transfert (302) en communication fluidique avec l'entrée (311) de conduit d'évacuation, le capillaire de transfert (302) comprenant une pointe (312) de capillaire de transfert située à une distance de l'entrée (311) de conduit d'évacuation ; et
un dispositif (365) de réglage de distance configuré pour régler la distance entre la pointe (312) de capillaire de transfert et l'entrée (311) de conduit d'évacuation.

2. Système (100) selon la revendication 1, dans lequel :
l'entrée (311) de conduit d'évacuation définit au moins partiellement un volume de réception limité par un ménisque ; et
la pointe (312) de capillaire de transfert est en contact fluidique avec le volume de réception à l'intérieur du ménisque et/ou
dans lequel le dispositif de réglage de distance est configuré pour régler la distance entre la pointe (312) de capillaire de transfert et l'entrée (311) de conduit d'évacuation à l'intérieur du ménisque.

3. Système (100) selon l'une quelconque des revendications 1 ou la revendication 2, comprenant en outre :
un capteur de pression de fluide configuré pour mesurer une différence de pression entre le capillaire de transfert (302) et le conduit d'évacuation (310) ;
dans lequel le dispositif de réglage de la distance est configuré pour régler la distance sur la base de la différence de pression mesurée, facultativement,
dans lequel le dispositif de réglage de distance est configuré pour régler la distance de manière à éliminer sensiblement la différence de pression mesurée.

4. Système (100) selon l'une quelconque des revendications 1 à 3, dans lequel le capillaire de transfert (302) est en communication fluidique avec un dispositif d'échantillonnage sur un côté de celui-ci en regard de la pointe (312) de capillaire de transfert, facultativement,
dans lequel le dispositif de réglage de distance comprend un boîtier fixé à au moins l'un parmi l'OPI (104) et le dispositif d'échantillonnage.

5. Système (100) selon l'une quelconque des revendications 1 à 4, dans lequel :
le capillaire de transfert (302) et la pointe (312) de capillaire de transfert sont enfermés dans un manchon mobile, la pointe (312) de capillaire de transfert étant mobile par rapport au capillaire de transfert (302) dans le manchon mobile ; et
le dispositif de réglage de distance est fixé de manière mobile à la pointe (312) de capillaire de transfert, facultativement,
dans lequel :
le dispositif de réglage de distance comprend une vis rotative fixée de manière mobile à la pointe (312) de capillaire de transfert ; et
une rotation de la vis rotative entraîne un déplacement linéaire de la pointe (312) de capillaire de transfert par rapport au capillaire de transfert (302).

6. Système (100) selon l'une quelconque des revendications 1 à 5, dans lequel le dispositif de réglage de distance est fixé de manière mobile à l'entrée (311) de conduit d'évacuation, facultativement,
dans lequel :
le dispositif de réglage de distance comprend une vis rotative fixée de manière mobile à l'entrée (311) de conduit d'évacuation ; et
une rotation de la vis rotative entraîne un déplacement linéaire de l'entrée (311) de conduit d'évacuation par rapport à la pointe (312) de capillaire de transfert.

7. Système (100) selon l'une quelconque des revendications 1 à 6, dans lequel le dispositif de réglage de distance est fixé de manière mobile au capillaire de transfert (302), facultativement,
dans lequel :
le dispositif de réglage de distance comprend une vis rotative fixée de manière mobile au capillaire de transfert (302) ; et
une rotation de la vis rotative entraîne un déplacement linéaire de la pointe (312) de capillaire de transfert par rapport à l'entrée (311) de conduit d'évacuation.

8. Système (100) selon l'une quelconque des revendications 1 à 7, dans lequel l'un parmi le capillaire de transfert (302), la pointe (312) de capillaire de transfert et l'entrée (311) de conduit d'évacuation est mobile dans l'une d'une direction longitudinale de l'OPI (104) et dans une direction perpendiculaire à la direction longitudinale de l'OPI (104).

9. Système (100) selon l'une quelconque des revendications 1 à 8, comprenant en outre un mécanisme de verrouillage configuré pour verrouiller le capillaire de transfert (302) dans une direction longitudinale de l'OPI (104).

10. Système (100) selon l'une quelconque des revendications 1 à 9, dans lequel une extrémité de la pointe (312) de capillaire de transfert présente une section transversale qui est sensiblement perpendiculaire à une direction longitudinale de celle-ci.

11. Procédé de traitement d'un échantillon liquide, le procédé comprenant :
le transfert de l'échantillon liquide d'un capillaire de transfert (302) à un conduit d'évacuation (310) d'OPI (104) via une entrée (311) de conduit d'évacuation, l'entrée (311) de conduit d'évacuation définissant au moins partiellement un volume de réception limité par un ménisque, le capillaire de transfert (302) comprenant une pointe (312) de capillaire de transfert en communication fluidique avec le volume de réception à l'intérieur du ménisque, dans lequel la pointe (312) de capillaire de transfert est à une distance de l'entrée (311) de conduit d'évacuation à l'intérieur du ménisque ;
la mesure d'une différence de pression entre le conduit d'évacuation (310) et la pointe (312) de capillaire de transfert ; et
le réglage de la distance entre la pointe (312) de capillaire de transfert et l'entrée (311) de conduit d'évacuation sur la base de la différence de pression mesurée.

12. Procédé selon la revendication 11, dans lequel la mesure de la différence de pression comprend en outre la détermination d'un effet Venturi de l'échantillon liquide entre l'entrée (311) de conduit d'évacuation et la pointe (312) de capillaire de transfert, facultativement,
dans lequel le réglage de la distance comprend le réglage de la distance de façon à sensiblement éliminer l'un parmi la différence de pression mesurée et l'effet Venturi déterminé.

13. Procédé selon l'une quelconque des revendications 11 à 12, dans lequel le réglage de la distance comprend le déplacement du conduit d'évacuation (310) par rapport à la pointe (312) de capillaire de transfert à l'intérieur du ménisque.

14. Procédé selon l'une quelconque des revendications 11 à 13, dans lequel le réglage de la distance comprend le déplacement de la pointe (312) de capillaire de transfert par rapport au capillaire de transfert à l'intérieur du ménisque et/ou
dans lequel le réglage de la distance comprend le déplacement du capillaire de transfert par rapport au conduit d'évacuation (310) à l'intérieur du ménisque.

15. Procédé selon l'une quelconque des revendications 11 à 14, dans lequel le réglage de la distance comprend le déplacement de l'un parmi le capillaire de transfert, la pointe (312) de capillaire de transfert et le conduit d'évacuation (310) dans l'une d'une direction longitudinale de l'OPI (104) et dans une direction perpendiculaire à la direction longitudinale de l'OPI (104).
